# EUROPEAN PATENT APPLICATION

(11) **EP 3 097 799 A1**
(43) Date of publication of application: **30.11.2016**
(21) Application number: 14879357.3
(22) Date of filing: 20.02.2014
(51) Int. Cl.: A24F 47/00, H01M 10/44

(54) **BATTERY ASSEMBLY FOR ELECTRONIC CIGARETTE, ELECTRONIC CIGARETTE AND CONTROL METHOD THEREFOR**

(30) Priority: 26.01.2014 CN 201420051821 U
(71) Applicant: Huizhou Kimree Technology Co., Ltd. Shenzhen Branch, Guangdong 518000 (CN)
(72) Inventor: LIU, Qiuming, Huizhou Guangdong 516000 (CN)
(74) Representative: Zacco Sweden AB
(86) International application number: PCT/CN2014/072312
(87) International publication number: WO 2015/109626

(57) **Abstract**

A battery assembly for an electronic cigarette, an electronic cigarette and a control method therefor. In the battery assembly (10) for an electronic cigarette, a microcontroller (102) is simultaneously connected to a battery (101) and an atomisation assembly (20), enabling the battery (101) and the atomisation assembly (20) to form a current loop. The microcontroller (102) is also respectively connected to a high voltage end and a low voltage end of a heating wire of the atomisation assembly (20) via different pins. The connection relationship enables the microcontroller (102) to obtain a relevant parameter from the heating wire via the various pins, and thereby determine a resistance value of the heating wire. When it is determined that the resistance value of the heating wire of the atomisation assembly (20) exceeds a resistance preset range, the microcontroller (102) controls a circuit between the battery (101) and the heating wire of the atomisation assembly (20) to be disconnected. When the battery assembly (10) for an electronic cigarette does not match the power of the atomisation assembly (20), the electronic cigarette is thus stopped from working, thereby preventing there being an insufficient amount of vapour during use, and preventing the battery from heating and leaking fluid.

## Description

This application claims priority to Chinese Patent Application No. 201420051821.3 titled "BATTERY ASSEMBLY OF ELECTRONIC CIGARETTE, AND ELECTRONIC CIGARETTE" and filed with the Chinese State Intellectual Property Office on January 26, 2014, which is incorporated herein by reference in its entirety.

### FIELD

The present disclosure relates to the technical field of electronic cigarettes, and in particular to a battery assembly for an electronic cigarette, an electronic cigarette and a control method thereof.

### BACKGROUND

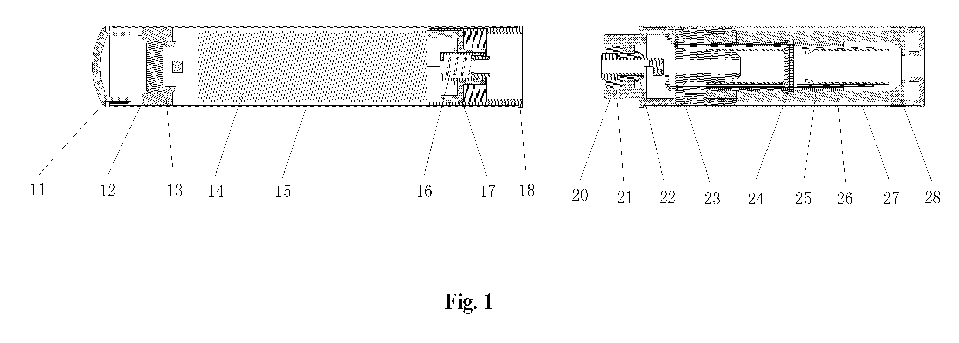

A conventional electronic cigarette mainly includes a battery assembly and an atomization assembly, and a structure thereof is shown in Figure 1. The battery assembly includes an end cover 11, a microphone controller 12, a microphone base 13, a battery 14, a battery sleeve 15, a bottom electrode 16, an electrode fixture 17 and a connection base 18. The atomization assembly includes a connector 20, a top electrode 21, a top insulating ring 22, an atomizer base 23, an atomizer 24, a cotton varnished sleeve 25, oil storage cotton 26, an atomizer sleeve 27 and a suction nozzle cover 28.

With reference to Figure 1, the electronic cigarette can operate as long as the connection base 18 in the battery assembly is connected to the connector 20 in the atomization assembly. There are varieties of atomization assemblies available in market now, resistances of electric heating wires in different kinds of atomization assemblies are different, and for an atomization assembly with any parameter or conforming to any standard, as long as an interface structure thereof matches that of a battery assembly in an electronic cigarette, the atomization assembly can be used in combination with the battery assembly, as is found out by the inventor. Thereby, there may be a mismatch between powers of the battery assembly in the electronic cigarette and the atomization assembly. A high resistance of the atomization assembly can result in insufficient smoke generated in operation, and a low resistance of the atomization assembly can cause the battery to be over heated or fluid leakage, which result in poor user experience and may bring about a risk to security of a user.

### SUMMARY

In view of the above, a battery assembly for an electronic cigarette, an electronic cigarette and a control method thereof are provided according to the present disclosure, to solve the problem that user experience is poor and there is a security risk in an electronic cigarette caused by a mismatch between powers of the battery assembly of the electronic cigarette and the atomization assembly in conventional technology.

To achieve the object above, following technical solutions are provided according to the present disclosure.

A battery assembly for an electronic cigarette, applied to form the electronic cigarette in combination with an atomization assembly, is provided, which includes:
a battery, configured to provide a voltage for an electric heating wire of the atomization assembly; and
a microcontroller, connected to the battery and the electric heating wire of the atomization assembly and configured to control to open a circuit connected between the battery and the electric heating wire of the atomization assembly in a case that a resistance of the electric heating wire of the atomization assembly is determined to be beyond a predetermined resistance range,
where the microcontroller includes a first pin, a second pin and a third pin, the first pin is connected to a high voltage end of the electric heating wire, the second pin is connected to a low voltage end of the electric heating wire via an electrical element and the third pin is connected to the low voltage end of the electric heating wire.

Optionally, the electrical element is a resistor, and the resistor is connected in series between the second pin of the microcontroller and the low voltage end of the electric heating wire.

Optionally, the electrical element is an ammeter, the ammeter is connected in series between the third pin of the microcontroller and the low voltage end of the electric heating wire, and the second pin is connected to the ammeter.

Optionally, the battery is rechargeable battery.

Optionally, the battery assembly further includes:
an indicator lamp, connected to the microcontroller and configured to indicate a charging status.

Optionally, the rechargeable battery includes a charging circuit and a power supply circuit.

An electronic cigarette is provided, which includes any above-described battery assembly for an electronic cigarette.

Optionally, the electronic cigarette further includes:
an airflow sensor connected to the microcontroller.

A control method of an electronic cigarette, applied to an electronic cigarette including any above-described battery assembly, is provided, which includes:
determining a resistance of the electric heating wire of the atomization assembly;
determining whether the resistance is beyond a predetermined resistance range; and
opening the circuit connected between the battery and the electric heating wire of the atomization assembly in a case that the resistance is beyond the predetermined resistance range.

Optionally, determining the resistance of the electric heating wire of the atomization assembly includes:
obtaining a current through the electric heating wire and a voltage across the electric heating wire; and
determining the resistance of the electric heating wire of the atomization assembly by performing calculation based on the current and the voltage.

According to the technical solutions above, compared with conventional technology, a battery assembly for an electric cigarette, an electric cigarette and a control method thereof are provided according to the present disclosure. In the battery assembly for the electric cigarette, the microcontroller is connected to both the battery and the atomization assembly, to form a current loop with the battery and the atomization assembly, and the microcontroller is connected to the high voltage end and the low voltage end of the electric heating wire of the atomization assembly via different pins. The connection enable the microcontroller to determine the resistance of the electric heating wire by obtaining related parameters from the electric heating wire through the pins and control to open the circuit connected between the battery and the electric heating wire of the atomization assembly in a case that it is determined that the resistance of the electric heating wire of the atomization assembly is beyond the predetermined resistance range. In this way, the electronic cigarette can be controlled to stop operating in a case that there is a mismatch between powers of the battery assembly for the electronic cigarette and the atomization assembly, thereby avoiding occurrence of generating insufficient smoke and preventing the battery from being over heated and leaking fluid during use of the electronic cigarette.

### BRIEF DESCRIPTION OF THE DRAWINGS

The drawings to be used in the descriptions of embodiments or conventional technology are described briefly as follows, so that technical solutions according to the embodiments of the invention or according to conventional technology may become clearer. Apparently, the drawings in the following descriptions only illustrate some embodiments of the invention. For those in the art, other drawings may be obtained based on these drawings without any creative work.
Figure 1 is a schematic structural diagram of an electronic cigarette according to conventional technology;
Figure 2 is a functional block diagram of a battery assembly for an electronic cigarette according to an embodiment of the invention;
Figure 3 is a functional block diagram of a battery assembly for an electronic cigarette according to an embodiment of the invention;
Figure 4 is a functional block diagram of a battery assembly for an electronic cigarette according to an embodiment of the invention;
Figure 5 is a functional block diagram of a battery assembly for an electronic cigarette according to an embodiment of the invention; and
Figure 6 is a functional block diagram of an electronic cigarette according to an embodiment of the invention.

11 end cover, 12 microphone controller, 13 microphone base, 14 battery, 15 battery sleeve, 16 spring electrode, 17 electrode fixture, 18 connection base, 20 connector, 21 top electrode, 22 top insulating ring, 23 atomizer base, 24 electric heating wire, 25 PVC silicone fiberglass sleeving, 26 oil storage cotton, 27 atomizer sleeve, 28 seal ring, 29 suction nozzle cover.

### DETAILED DESCRIPTION

A battery assembly for an electronic cigarette and an electronic cigarette are provided according to the embodiments of the invention, where the electronic cigarette is provided with a function of determining a resistance of an electric heating wire in an atomization assembly, which ensures that the electronic cigarette can normally operate only in a case that a power of the battery assembly for the electronic cigarette matches that of the atomization assembly, thereby avoiding occurrence of generating insufficient smoke and preventing the battery from being over heated and leaking fluid during use of the electronic cigarette.

Technical solutions according to the embodiments of the invention are described clearly and completely hereinafter in conjunction with the drawings. Apparently, the described embodiments are only a few rather than all of the embodiments of the invention. Any other embodiments obtained by those skilled in the art based on the embodiments according to the present disclosure without any creative work fall in the scope of the present disclosure.

### First embodiment

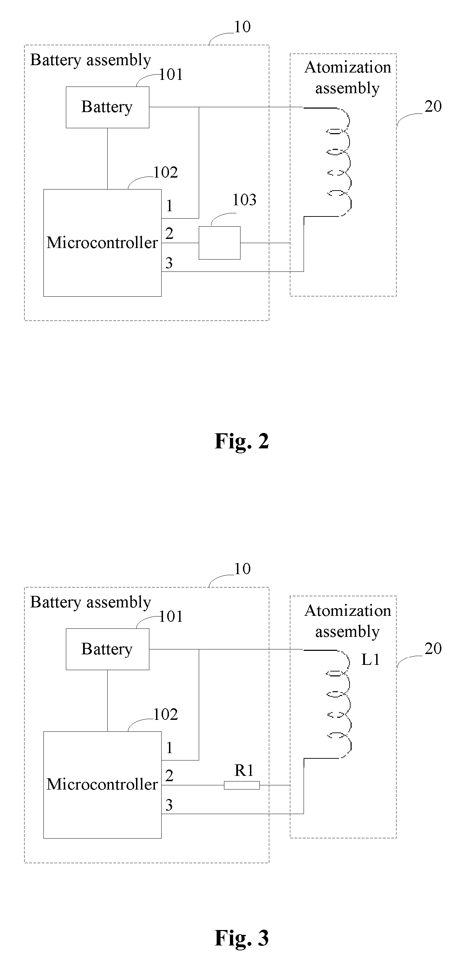

Figure 2 is a functional block diagram of a battery assembly for an electronic cigarette according to an embodiment of the invention. As shown in Figure 2, the battery assembly 10 for the electronic cigarette may be combined with an atomization assembly 20 to form the electronic cigarette, and includes a battery 101 and a microcontroller 102.

The battery 101 may provide a voltage for an electric heating wire of the atomization assembly 20. The microcontroller 102 is connected to the battery 101 and the electric heating wire of the atomization assembly 20. The microcontroller 102 may control to open a circuit connected between the battery 101 and the electric heating wire of the atomization assembly 20 in a case that a resistance of the electric heating wire of the atomization assembly 20 is determined to be beyond a predetermined resistance range.

The microcontroller 102 may include a first pin, a second pin and a third pin. The first pin is connected to a high voltage end of the electric heating wire, the second pin is connected to a low voltage end of the electric heating wire via an electrical element 103 and the third pin is connected to the low voltage end of the electric heating wire.

In this way, the microcontroller 102 is provided with a function of determining the resistance of the electric heating wire of the atomization assembly 20. A structure and an operating principle of the electronic cigarette according to the present disclosure are briefly described in conjunction with the above-described connections hereinafter.

The battery assembly 10 for the electronic cigarette not only includes the battery 101, but also includes the microcontroller 102 connected to the battery and the electric heating wire of the atomization assembly 20. The microcontroller 102 can obtain electrical parameters from the electric heating wire, determine the resistance of the electric heating wire by performing some basic logical calculations on the obtained electrical parameters, and compare the resistance of the electric heating wire obtained through the calculations with the predetermined resistance range to determine whether the resistance is beyond the predetermined resistance range. The predetermined resistance range is determined based on a standard of matching a power of the battery assembly 10. The resistance being beyond the predetermined resistance range indicates that a power of the electric heating wire does not match that of the battery 101, that is, a power of the atomization assembly 20 does not match that of the battery assembly 10. If continuing to operate, the atomization assembly 20 may generate insufficient smoke or the battery may be over heated or leak fluid. Thus, in this case, the microcontroller 102 needs to open the circuit connected between the battery 101 and the electric heating wire of the atomization assembly 20.

Reference can be made to Figure 3 for a possible implementation, where Figure 3 is a functional block diagram of another battery assembly for an electronic cigarette according to an embodiment of the invention. As shown in Figure 3, the electrical element 103 may be a resistor R1. The microcontroller 102 may include a first pin, a second pin and a third pin. The first pin is connected to a high voltage end of an electric heating wire L1, the second pin connected to a low voltage end of the electric heating wire L1 via the resistor R1 and the third pin is connected to the low voltage end of the electric heating wire L1. The resistor R1 is connected in series between the second pin of the microcontroller 102 and the low voltage end of the electric heating wire L1, to detect and calculate a current through the electric heating wire L1. Thus, the microcontroller 102 can obtain a resistance of the electric heating wire L1 based on the calculated current. The resistance of the resistor R1 is known accordingly. To maximally reduce influence on normal operating of the electronic cigarette, the resistor R1 may be configured to have a low resistance, for example, 0.3Ω.

The operating principle of the electronic cigarette according to the embodiment is described hereinafter in conjunction with Figure 3. At the beginning of operating of the electronic cigarette, a power supply switch of the electric heating wire L1 is turned on under the control of the microcontroller 102. A current will flow through the electric heating wire L1 and the electric heating wire L1 becomes heated. Meanwhile, the first and third pins of the microcontroller 102 detect a voltage across the electric heating wire L1. The current flowing through the electric heating wire L1 further flows through the resistor R1 to form a loop. A voltage drop across the resistor R1 is generated and is inputted into the microcontroller 102 through the second and third pins. The microcontroller 102 obtains the current through the resistor R1 according to the Ohm's law, that is, the current I through the electric heating wire, where I= voltage across R1/ resistance of R1, and calculates the resistance R of the electric heating wire L1 based on the obtained current I, where R= voltage across the electric heating wire/current I through the electric heating wire. Further, after the resistance R of the electric heating wire L1 is determined, the resistance R is compared with the predetermined resistance range, that is, determining whether the resistance R is lower than a predetermined minimum resistance or higher than a predetermined maximum resistance. In a case that the resistance of the electric heating wire L1 of the atomization assembly 20 is determined to be beyond the predetermined resistance range, the microcontroller 102 can open the circuit connected between the battery 101 and the electric heating wire L1 of the atomization assembly 20 to stop the electronic cigarette from operating.

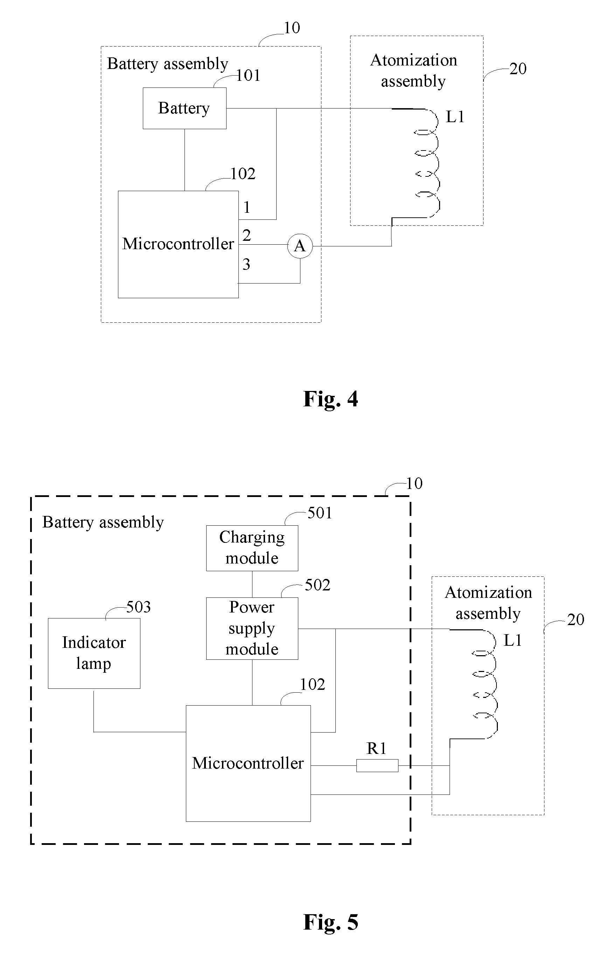

Of course, the above-described method for detecting the resistance of the electric heating wire L1 of the atomization assembly 20 is not the only implementation, and reference can be made to Figure 4 for another implementation, where Figure 4 is a functional block diagram of another battery assembly for an electronic cigarette according to an embodiment of the invention. As shown in Figure 4, the electrical element 103 may be an ammeter A. The microcontroller 102 includes a first pin, a second pin and a third pin. The first pin is connected to the high voltage end of the electric heating wire L1,the third pin is connected to the low voltage end of the electric heating wire L1 via the ammeter A and the second pin is connected to the ammeter A. The current flowing through the electric heating wire L1 may further flow through the third pin of the microcontroller 102 and the battery 101 to form a current loop. The current I flowing through the electric heating wire L1 can be directly obtained with the ammeter A. The microcontroller 102 can obtain the current I through the second pin directly connected to the ammeter A and the resistance of the electric heating wire L1 can be calculated with the voltage across the electric heating wire L1 according to the Ohm's law.

To be specific, an operating process of the microcontroller 102 may include:
step S1, determining the resistance of the electric heating wire of the atomization assembly;
step S2, determining whether the resistance is beyond the predetermined resistance range; and
step S3, control to open the circuit connected between the battery and the electric heating wire of the atomization assembly in a case that the resistance is beyond the predetermined resistance range.

A specific implementation of step S1 of determining the resistance of the electric heating wire of the atomization assembly may include determining the current through the electric heating wire and the voltage across the electric heating wire first and then calculating the resistance of the electric heating wire based on the current and the voltage of the electric heating wire according to the Ohm's law. The method may be implemented based on circuits with different connection structures, such as the connection structure as shown in Figure 3 or Figure 4. Reference can be made to the descriptions above with respect to Figures 3 and 4 for specific connections of the connection structures as shown in Figures 3 and 4, which are not redundantly described herein.

In the embodiment, the microcontroller in the battery assembly for an electronic cigarette is connected to both the battery and the atomization assembly, to form a current loop with the battery and the atomization assembly, and the microcontroller is connected to the high voltage end and the low voltage end of the electric heating wire of the atomization assembly via different pins. The connection enable the microcontroller to determine the resistance of the electric heating wire by obtaining related parameters from the electric heating wire through the pins and control to open the circuit connected between the battery and the electric heating wire of the atomization assembly in a case that it is determined that the resistance of the electric heating wire of the atomization assembly is beyond the predetermined resistance range. In this way, the electronic cigarette can be controlled to stop operating in a case that there is a mismatch between powers of the battery assembly for the electronic cigarette and the atomization assembly, thereby avoiding occurrence of generating insufficient smoke and preventing the battery from being over heated and leaking fluid during use of the electronic cigarette.

### Second embodiment

Figure 5 is a functional block diagram of a battery assembly for a fourth electronic cigarette according to an embodiment of the invention. In the embodiment, detailed structural division and addition of structures are made to the implementations according to the first embodiment. As shown in Figure 5, the battery 101 according to the first embodiment may be a rechargeable battery, which includes a charging circuit and a power supply circuit. Since the charging circuit and the power supply circuit are the same as those according to conventional technology, for ease of illustration in Figure 5, the charging circuit is represented by a charging module 501 and the power supply circuit is represented by a power supply module 502. The battery assembly 10 may further include an indicator lamp 503 connected to the microcontroller 102 and configured to indicate a charging status for a user to visually know an operating status of the battery assembly 10, such as a charging status and a power supply status. The indicator lamp 503 may indicate different operating statuses by displaying different colors.

In the embodiment, the battery assembly for an electronic cigarette has more detailed functions than the battery assembly for an electronic cigarette according to the first embodiment, such as a function of reusable charging and power supply and a function of indicating the operating status of the battery assembly, better perfecting functions of an electronic cigarette and facilitate using of a user.

### Third embodiment

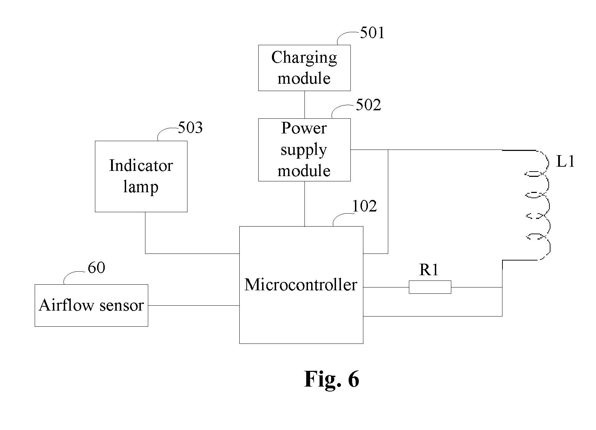

An electronic cigarette is further provided according to an embodiment of the invention, which may include the battery assembly 10 for an electronic cigarette according to any of the implementations in the embodiments above. Figure 6 is a functional block diagram of the electronic cigarette according to the embodiment of the invention. The electronic cigarette in Figure 6 not only includes related structures according to the first and second embodiments, but also includes an airflow sensor 60 connected to the microcontroller 102. The airflow sensor 60 may include a micro air pressure switch, and an air pressure thereof changes when a user smokes. In this case, the micro air pressure switch can be turned on and send an instruction signal to the microcontroller 102. The microcontroller 102 can control the power supply circuit of the battery 101 to supply power to the electric heating wire L1 of the atomization assembly 20 in response to the instruction signal.

Since the electronic cigarette according to the embodiment may include the battery assembly for an electronic cigarette according to any of the implementations in the first and second embodiments, the electronic cigarette can also open the circuit connected between the battery and the electric heating wire of the atomization assembly in a case that the microcontroller determines the resistance of the electric heating wire of the atomization assembly is beyond the predetermined resistance range. In this way, the electronic cigarette can be controlled to stop operating in a case that a power of the battery assembly for an electronic cigarette does not match that of the atomization assembly, avoiding occurrence of generating insufficient smoke and preventing the battery from being over heated and leaking fluid during use of the electronic cigarette.

The embodiments in the specification are described in a progressive manner, each of which emphasizes differences from the others, and reference can be made to each other for same or similar parts.

The description of the embodiments herein enables those skilled in the art to implement or use the present disclosure. Numerous modifications to the embodiments are apparent to those skilled in the art, and the general principles defined herein can be implemented in other embodiments without deviating from the spirit or scope of the present disclosure. Therefore, the invention is not limited to the embodiments described herein, but is in accordance with the widest scope consistent with the principles and novel features disclosed herein.

## Claims

1. A battery assembly for an electronic cigarette, applied to form the electronic cigarette in combination with an atomization assembly, comprising:
a battery, configured to provide a voltage for an electric heating wire of the atomization assembly; and
a microcontroller, connected to the battery and the electric heating wire of the atomization assembly and configured to control to open a circuit connected between the battery and the electric heating wire of the atomization assembly in a case that a resistance of the electric heating wire of the atomization assembly is determined to be beyond a predetermined resistance range,
wherein the microcontroller comprises a first pin, a second pin and a third pin, the first pin is connected to a high voltage end of the electric heating wire, the second pin is connected to a low voltage end of the electric heating wire via an electrical element and the third pin is connected to the low voltage end of the electric heating wire.

2. The battery assembly for an electronic cigarette according to claim 1, wherein the electrical element is a resistor connected in series between the second pin of the microcontroller and the low voltage end of the electric heating wire.

3. The battery assembly for an electronic cigarette according to claim 1, wherein the electrical element is an ammeter connected in series between the third pin of the microcontroller and the low voltage end of the electric heating wire, and the second pin is connected to the ammeter.

4. The battery assembly for an electronic cigarette according to claim 1, wherein the battery is a rechargeable battery.

5. The battery assembly for an electronic cigarette according to claim 4, further comprising:
an indicator lamp, connected to the microcontroller and configured to indicate a charging status.

6. The battery assembly for an electronic cigarette according to claim 4, wherein the rechargeable battery comprises a charging circuit and a power supply circuit.

7. An electronic cigarette, comprising the battery assembly for an electronic cigarette according to any one of claims 1 to 6.

8. The electronic cigarette according to claim 7, further comprising:
an airflow sensor connected to the microcontroller.

9. A control method of an electronic cigarette, applied to an electronic cigarette comprising the battery assembly according to any one of claims 1 to 6, comprising:
determining a resistance of the electric heating wire of the atomization assembly;
determining whether the resistance is beyond a predetermined resistance range; and
opening the circuit connected between the battery and the electric heating wire of the atomization assembly in a case that the resistance is beyond the predetermined resistance range.

10. The control method of an electronic cigarette according to claim 9, wherein determining the resistance of the electric heating wire of the atomization assembly comprises:
obtaining a current through the electric heating wire and a voltage across the electric heating wire; and
determining the resistance of the electric heating wire of the atomization assembly by performing calculation based on the current and the voltage.
